# EUROPÄISCHE PATENTSCHRIFT

(11) **EP 2 878 431 B1**
(45) Veröffentlichungstag und Bekanntmachung des Hinweises auf die Patenterteilung: **01.08.2018**
(21) Anmeldenummer: 14003619.5
(22) Anmeldetag: 24.10.2014
(51) Int. Cl.: B29C 65/22, B29C 65/78, B29C 65/00, B29C 70/28, B25J 15/06, B29C 70/38

(54) **Verfahren zur Herstellung eines aus mehreren Lagen bestehenden Fasergeleges, sowie Greifvorrichtung zur Durchführung des Verfahrens**
Method for producing a fibre arrangement comprising several layers, and gripping device for performing the method
Procédé de fabrication d'une structure en fibres comportant une ou plusieurs couches, et dispositif de préhension destiné à exécuter le procédé

(30) Priorität: 15.11.2013 DE 102013019146
(43) Veröffentlichungstag der Anmeldung: 03.06.2015
(73) Patentinhaber: AUDI AG, 85045 Ingolstadt (DE)
(72) Erfinder: Thurmeier, Markus, DE - 84166 Adlkofen (DE); Brymerski, Wojciech, DE - 70806 Kornwestheim (DE)
(74) Vertreter: Neuhausen, Marc-Alexander

(56) Entgegenhaltungen:
- EP-A1- 2 650 109
- EP-A2- 2 626 182
- AT-U1- 11 915
- CH-A1- 704 406
- DE-A1-102007 012 608
- DE-A1-102007 028 581
- DE-A1-102010 044 721
- DE-A1-102011 114 015
- DE-U1-202009 014 155
- ANDREAS ANGERER ET AL: "Design of an automation system for preforming processes in aerospace industries", AUTOMATION SCIENCE AND ENGINEERING (CASE), 2011 IEEE CONFERENCE ON, IEEE, 24. August 2011 (2011-08-24), Seiten 557-562, XP031975760, DOI: 10.1109/CASE.2011.6042411 ISBN: 978-1-4577-1730-7

## Beschreibung

Die Erfindung betrifft ein Verfahren zur Herstellung eines aus mehreren Lagen bestehenden Fasergeleges, welches für die Weiterverarbeitung zu einem faserverstärkten Kunststoffbauteil vorgesehen ist.

Die Erfindung betrifft ferner eine Greifvorrichtung zur Durchführung eines betreffenden Verfahrens.

Bauteile aus faserverstärktem Kunststoff weisen häufig einen duroplastischen Matrixwerkstoff auf. Die Herstellung solcher Bauteile, bspw. in einem RTM-Prozess, ist in der Regel aufwändig und teuer. Zunehmend kommen aber auch thermoplastische Matrixwerkstoffe bzw. Matrix-Kunststoffwerkstoffe zum Einsatz. Zur Herstellung eines aus faserverstärktem thermoplastischen Kunststoff gebildeten Bauteils können faserverstärkte thermoplastische Halbzeuge, insbesondere in Form von Folien oder Platten, verwendet werden. Aus den Halbzeugen werden zunächst Zuschnitte (sog. Patches) erzeugt, die nach Erwärmung zu einem flächigen Bauteil umgeformt werden können, was bspw. in einem beheizten Press- bzw. Formwerkzeug erfolgt. Als Ausgangsmaterial sind insbesondere auch endlosfaserverstärkte thermoplastische Halbzeuge geeignet, wie bspw. sog. UD-Tapes, bei denen die Fasern als Endlosfasern ausgebildet und in eine einzige Richtung orientiert sind. Diese Vorgehensweise bietet auch die vergleichsweise einfache Möglichkeit, durch Verwendung mehrerer Zuschnitte gewichts- und belastungsoptimierte Bauteile herzustellen. Hierzu müssen die Zuschnitte jedoch vor dem Umformen in definierter Weise zu einem weiterverarbeitbaren Fasergelege zusammengeführt werden (sog. Patch Placement), welches dann bspw. in ein Press- bzw. Formwerkzeug eingelegt werden kann.

Der Erfindung liegt die Aufgabe zugrunde, eine geeignete und insbesondere auch serientaugliche Vorgehensweise zur Herstellung eines weiterverarbeitbaren Fasergeleges aus faserverstärktem thermoplastischen Halbzeug anzugeben.

Zum Stand der Technik wird noch auf DE 20 2009 014 155 U1 hingewiesen, aus der eine Vorrichtung zum Legen von flachen, insbesondere formlabilen Bauteilen, wie bspw. Fasertextilien, auf ein Formwerkzeug bekannt ist.

Die oben genannte Aufgabe wird durch ein erfindungsgemäßes Verfahren mit den Merkmalen des Patentanspruchs 1 gelöst. Mit einem nebengeordneten Patentanspruch 5 erstreckt sich die Lösung der Aufgabe auch auf eine erfindungsgemäße Greifvorrichtung zur Durchführung des erfindungsgemäßen Verfahrens. Bevorzugte Weiterbildungen und Ausgestaltungen ergeben sich sowohl aus den abhängigen Patentansprüchen als auch aus den nachfolgenden Erläuterungen.

Das erfindungsgemäße Verfahren zur Herstellung eines aus mehreren Lagen bestehenden Fasergeleges für die Weiterverarbeitung zu einem faserverstärkten Kunststoffbauteil ist im Anspruch 1 definiert und umfasst zumindest die folgenden, automatisiert ausgeführten Schritte:
- Bereithalten mehrerer aus faserverstärktem thermoplastischen Halbzeug, vorzugsweise mit gerichteten Endlosfasern, gebildeter Zuschnitte, die insbesondere hinsichtlich Zuschnittsgeometrie, Fasermaterial und/oder Dicke unterschiedlich ausgebildet sind;
- Verlegen und Aufschichten der Zuschnitte auf einer Ablage, wobei es sich auch um eine Ablage in einem Formwerkzeug handeln kann, wozu wenigstens eine Greifvorrichtung wiederholend wenigstens einen Zuschnitt aufnimmt, zu der Ablage transportiert und dort in einer für den jeweiligen Zuschnitt definierten Position und auch mit einer für den jeweiligen Zuschnitt definierten Faserausrichtung ablegt; und
- thermisches Anheften des jeweils abzulegenden Zuschnitts, insbesondere jedes abzulegenden Zuschnitts, wozu dieser mit Hilfe der Greifvorrichtung punktuell, d. h. an wenigstens einer Heftstelle, angeschmolzen und beim Ablegen an die zuvor abgelegten Zuschnitte angepresst wird. Bevorzugt werden hierbei die bereits abgelegten Zuschnitte einschließlich des zuletzt abgelegten Zuschnitts zusammengeheftet, d. h. punktuell vorverbunden.

Die erfindungsgemäße Verfahrensweise ermöglicht die reproduzierbare und schnelle Herstellung (d. h. Herstellen mit kurzer Taktzeit) von Fasergelegen für die anschließende Weiterverarbeitung zu einem faserverstärkten Kunststoffbauteil. Ferner ermöglicht die erfindungsgemäße Verfahrensweise eine kostengünstige (da kein oder nur wenig Verschnitt anfällt) und qualitativ hochwertige Herstellung solcher Fasergelege. Die erfindungsgemäße Verfahrensweise ist serientauglich.

Das verwendete faserverstärkte thermoplastische Halbzeug weist bevorzugt Glasfasern oder Kohlenstofffasern auf, die insbesondere als gerichtete Endlosfasern ausgebildet sind. Bevorzugt handelt es sich um ein UD-Tape, wie obenstehend bereits erläutert. Das Halbzeug ist bereits mit einem thermoplastischen Matrix-Kunststoffwerkstoff versehen (sog. Vorkonsolidierung). Bei dem thermoplastischen Matrix-Kunststoffwerkstoff handelt es sich insbesondere um einen Polyamid-Kunststoff (bspw. PA 6 oder PA 6.6), einen Polyproplylen-Kunststoff oder einen Polyetherimid-Kunststoff. Es ist vorgesehen, dass die Zuschnitte bereits während des Transports zur Ablage mit Hilfe einer an der Greifvorrichtung ausgebildeten Heizeinrichtung an wenigstens einer Heftstelle erwärmt werden und dass dadurch der thermoplastische (Matrix-)Kunststoff lokal angeschmolzen (d. h. aufgeschmolzen oder zumindest geliert) wird. Dadurch kann die Taktzeit zur Herstellung eines Fasergeleges erheblich reduziert werden.

Besonders bevorzugt ist vorgesehen, dass die Heizeinrichtung an der Greifvorrichtung eine Temperatur erzeugt, die deutlich oberhalb der Schmelztemperatur des thermoplastischen Kunststoffs liegt. Die Temperatur liegt um mehr als 50° K, bevorzugt um mehr als 75° K und insbesondere um mehr als 100° K über der Schmelztemperatur des Matrix-Kunststoffs. Dadurch kann der Kunststoff auch bei kurzem Verfahrweg und/oder kurzer Verfahrzeit (die bspw. nur im Bereich weniger Sekunden liegt) angeschmolzen werden. Die Zerstörungstemperatur des Kunststoffs wird jedoch nicht überschritten. Die Heizeinrichtung wird nur während des Transports eines Zuschnitts beheizt. Die Heizeinrichtung, wobei es sich insbesondere um eine elektrisch betriebene Heizeinrichtung handelt, ist entsprechend, d. h. insbesondere im Hinblick auf eine kurze Aufwärmzeit, ausgebildet.

Bevorzugt wird ein abzulegender Zuschnitt beim Ablegen lediglich senkrecht zur Ablage und insbesondere vertikal bzw. in vertikaler Raumrichtung bewegt. Eine Abrollbewegung oder dergleichen ist aufgrund der angestrebten kurzen Taktzeit nicht vorgesehen.

Eine erfindungsgemäße Greifvorrichtung zur Durchführung des erfindungsgemäßen Verfahrens ist im Anspruch 5 definiert und umfasst einen Mehrachsroboter (Industrieroboter) und wenigstens einen an dessen Roboterarm befestigten und mit einer Heizeinrichtung ausgebildeten Vakuumgreifer bzw. Sauggreifer, sowie eine Steuereinrichtung zur Steuerung des Mehrachsroboters, des Sauggreifers und der Heizeinrichtung.

Die Greifvorrichtung ist bevorzugt derart ausgebildet, dass diese mehrere nebeneinanderliegende und/oder übereinanderliegende Zuschnitte aufnehmen, zur Ablage transportieren und dort einzeln oder zusammen in definierter Weise ablegen kann. Auch dies kann der Verkürzung der Taktzeit dienen. Der Sauggreifer weist einen aus Metall oder aus Kunststoff gebildeten Korpus mit einer daran ausgebildeten Ansaugfläche auf. Die Ansaugfläche ist über wenigstens eine Saugbohrung oder dergleichen mit einer Unterdruckquelle verbindbar. Durch Erzeugen eines Unterdrucks in der Saugbohrung kann der zu transportierende Zuschnitt an die Ansaugfläche angesaugt und somit festgehalten werden. Nach Abschalten des Unterdrucks fällt der festgehaltene Zuschnitt ab. Bevorzugt kann vorgesehen sein, dass zusätzlich ein Druckluft-Blasstoß durch die Saugbohrung geleitet wird, der das Ablösen des festgehaltenen Zuschnitts unterstützt. Es ist vorgesehen, dass die Ansaugfläche des Sauggreifers mit einer elektrisch beheizbaren Beschichtung beschichtet ist. Bei der Heizeinrichtung handelt es sich demnach um eine elektrische Heizbeschichtung, was insbesondere Gewichtsvorteile mit sich bringt. Geeignete Beschichtungen, bspw. Dispersionen mit Kohlenstoff-Nanopartikeln, sind aus dem Stand der Technik bekannt. Eine elektrische Heizbeschichtung kann bspw. auch aus Metalldraht- oder Kohlefaserbahnen, die in einer Schichtmatrix eingebettet sind, gebildet werden. Ferner ist vorgesehen, dass die Ansaugfläche des Sauggreifers mit einer Antihaftbeschichtung, wie bspw. Teflon oder dergleichen, beschichtet ist, wobei die Heizbeschichtung und die Antihaftbeschichtung ein mehrlagiges Beschichtungssystem bilden. Gegebenenfalls ist noch eine Isolierschicht und/oder Trennschicht, bspw. auf keramischer Basis, vorzusehen. Eine solche Isolier- und/oder Trennschicht kann unter der Heizbeschichtung (d. h. zwischen Korpus und Heizbeschichtung) und/oder zwischen der Heizbeschichtung und der Antihaftbeschichtung angeordnet sein.

Die Erfindung, die in den unabhängigen Ansprüchen 1 und 5 definiert ist, wird nachfolgend beispielhaft anhand der schematischen und nicht maßstabsgerechten Figuren näher erläutert. Die in den Figuren gezeigten und/oder nachfolgend erläuterten Merkmale können, unabhängig von konkreten Merkmalskombinationen, allgemeine Merkmale der Offenbarung sein.
- Fig. 1: zeigt in einer Draufsicht mehrere Zuschnitte und ein daraus gebildetes Fasergelege.
- Fig. 2: zeigt in einer Seitenansicht den Ablegevorgang eines Zuschnitts.

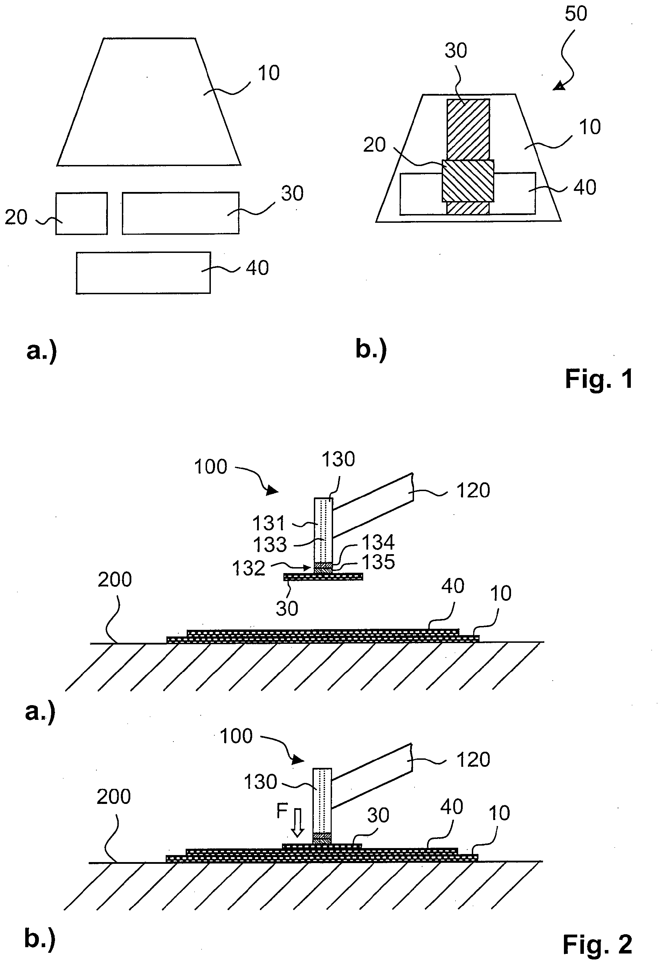

Fig. 1a zeigt mehrere Zuschnitte 10, 20, 30 und 40 eines faserverstärkten thermoplastischen Halbzeugs. Die Zuschnitte 10, 20, 30 und 40 unterscheiden sich in ihrer Zuschnittsgeometrie. Ferner können sich die Zuschnitte 10, 20, 30 und 40 auch hinsichtlich des verwendeten faserverstärkten thermoplastischen Halbzeugs unterscheiden. Fig. 1b zeigt ein aus den Zuschnitten 10, 20, 30 und 40 gebildetes Fasergelege 50, das nachfolgend zu einem belastungs- und gewichtsoptimierten, faserverstärkten Kunststoffbauteil weiterverarbeitet wird. Die Zuschnitte 10, 20, 30 und 40 sind in definierter Weise übereinanderliegend und gegebenenfalls auch nebeneinanderliegend angeordnet. Das Fasergelege 50 ist somit mehrschichtig bzw. mehrlagig aus den einzelnen Zuschnitten 10, 20, 30 und 40 gebildet. Die Faserrichtungen der einzelnen Lagen bzw. Schichten können sich unterscheiden, wie beispielhaft für die Zuschnitte 20 und 30 dargestellt, wodurch bspw. ein kraftflussorientierter Aufbau ermöglicht wird. Das Fasergelege 50 kann auch als Vorverbund bezeichnet werden. Es ist vorgesehen, dass die bereitgehaltenen Zuschnitte 10, 20, 30 und 40 einzeln (gegebenenfalls auch zu mehreren) mit Hilfe einer Greifvorrichtung 100 aufgenommen, zu einer Ablage 200 transportiert und dort in einer für den jeweiligen Zuschnitt definierten Position und mit einer definierten Faserausrichtung abgelegt werden, wobei die abzulegenden Zuschnitte mit Hilfe der Greifvorrichtung 100 punktuell, d. h. an wenigstens einer Heftstelle, angeschmolzen und beim Ablegen an die zuvor abgelegten Zuschnitte angepresst werden. Dies wird nachfolgend anhand der Fig. 2 erläutert.

Fig. 2 zeigt eine Ablage 200 zum definierten Aufschichten der Zuschnitte 10, 20, 30 und 40, wobei in Fig. 2a bereits zwei Zuschnitte 10 und 40 auf der Ablage 200 abgelegt sind. Die Ablage 200 hat in der gezeigten Darstellung eine ebene Ausgestaltung, ebenso ist jedoch auch eine räumliche Ausgestaltung möglich, wodurch ein Vorformen bzw. eine geringe räumliche Formgebung beim Ablegen der Zuschnitte ermöglicht wird. Die Ablage 200 und die Greifvorrichtung 100 bilden zusammen eine sog. Patch-Placement-Zelle, zu der auch eine Vorrichtung zur Erzeugung und/oder Bereithaltung der Zuschnitte 10, 20, 30 und 40 gehören kann.

Die Greifvorrichtung 100 umfasst einen in der Darstellung nur angedeuteten Mehrachsroboter, an dessen Roboterarm 120 ein Sauggreifer 130 befestigt ist. Am Roboterarm 120 können auch mehrere Sauggreifer 130 befestigt sein. Der Sauggreifer 130 weist einen aus Metall oder Kunststoff gebildeten Korpus 131 mit einer stirnseitigen Ansaugfläche 132 auf. Die Ansaugfläche 132 ist über wenigstens eine Saugbohrung 133 mit einer nicht gezeigten Unterdruckquelle verbunden. Die Saugbohrung 133 kann in Richtung der Ansaugfläche 132 mit einer Verästelung ausgebildet sein, so dass die Ansaugfläche 132 eine Vielzahl von Ansaugöffnungen aufweist. Die Ansaugfläche 132 ist mit einer elektrischen Heizbeschichtung 134 und mit einer Antihaftbeschichtung 135 versehen. Die Heizbeschichtung 134 und die Antihaftbeschichtung 135 bilden ein funktionales Mehrschichtsystem.

Die elektrische Heizbeschichtung 134 ermöglicht das gezielte Erwärmen bzw. Aufheizen der Ansaugfläche 132, wobei der Korpus 131 idealerweise nicht miterwärmt wird. Mit der Heizbeschichtung 134 können Temperaturen bis 400° C an der Ansaugfläche 132 erzeugt werden. Bevorzugt wird die Heizschicht 134 über einen immanenten elektrischen Widerstand aufgeheizt. Der Sauggreifer 130 weist bevorzugt einen massearmen Aufbau auf, was unter anderem im Hinblick auf schnelle Verfahrbewegungen und kurze Taktzeiten vorteilig ist. Gegebenenfalls kann auch ein kleinerer Mehrachsroboter mit geringer Antriebsleistung verwendet werden. Das Festhalten der Zuschnitte an bzw. auf der Ablage 200 kann in bekannter Weise mit Hilfe einer Ansaugeinrichtung oder dergleichen erfolgen.

Mit Hilfe der Greifvorrichtung 100 wird der zuvor aufgenommene Zuschnitt 30 definiert auf den beiden bereits abgelegten Zuschnitten 10 und 40 abgelegt (siehe Fig. 2a). Der mit Hilfe der Greifvorrichtung 100 punktuell festgehaltene Zuschnitt 30 wird bereits während des Transports zur Ablage 200 durch die elektrische Heizbeschichtung 134 lokal erwärmt, wodurch der thermoplastische Kunststoff anschmilzt. Das Erwärmen und Transportieren erfolgt somit in einem Arbeitsschritt. Sobald sich der Zuschnitt 30 oberhalb seiner definierten Ablageposition und in vorgegebener Ausrichtung befindet, wird dieser in einer vertikalen Bewegung abgelegt. Hierbei wird der Zuschnitt 30 mit Hilfe der Greifvorrichtung 100 an die zuvor abgelegten Zuschnitte 10 und 40 angepresst, wie in Fig. 2b mit dem Pfeil F veranschaulicht. Der Anpressdruck beim Ablegen des Zuschnitts 30 wird durch den Mehrachsroboter erzeugt und wirkt gegen die Ablage 200. Durch den angeschmolzenen Kunststoff wird der abgelegte bzw. abzulegende Zuschnitt 30 unter Ausbildung einer Heftverbindung an die bereits abgelegten Zuschnitte 10 und 40 angeheftet. Unter einem Heften bzw. Anheften oder auch Zusammenheften wird das punktuelle Verbinden der Zuschnitte an wenigstens einer Heftstelle verstanden.

Nach dem Anheftvorgang und noch vor dem Abheben des Sauggreifers 130 wird bevorzugt die elektrische Beheizung der Ansaugfläche 132 abgeschaltet. Beim Abheben des Sauggreifers 130 verhindert die Antihaftbeschichtung 135 ein Anhaften des abgelegten Zuschnitts 30 am Sauggreifer 130, obgleich geschmolzene Thermoplaste häufig eine hohe Anhaftneigung aufweisen. Die Antihaftbeschichtung 135 wirkt auch bei hohen Temperaturen von bis zu 400° C. Zusätzlich kann ein Druckluft-Blasstoß durch die Saugbohrung 133 aufgebracht werden. Ein solcher Druckluft-Blasstöß kann auch der Reinigung der Saugbohrung 133 dienen und ein Zusetzen bzw. Verkleben der Ansaugöffnung an der Ansaugfläche 132 verhindern. Dadurch kann ein zuverlässiger Dauerbetrieb in der Serienfertigung gewährleistet werden.

Bevorzugt wird jeder abgelegte Zuschnitt in der vorausgehend erläuterten Weise an die zuvor abgelegten Zuschnitte angeheftet, außer der erste abgelegte Zuschnitt, der lediglich auf der Ablage 200 abgelegt und bspw. durch Ansaugen fixiert wird. Das Anheften bzw. Zusammenheften der Zuschnitte beim Ablegen gewährleistet die Beibehaltung der relativen Positionen und Ausrichtungen der abgelegten Zuschnitte. Ferner ermöglicht das Zusammenheften auch die Transportierbarkeit des hergestellten Fasergeleges bzw. Vorverbunds 50, insbesondere dann, wenn es sich um nicht formstabile Zuschnitte 10, 20, 30 und 40 handelt.

Am Roboter bzw. an dessen Arm 120 können mehrere Sauggreifer 130 angeordnet sein, wobei bevorzugt mit jedem Sauggreifer eine Heftverbindung hergestellt werden kann. Bevorzugt werden beim Ablegen eines Zuschnitts, falls mehrere Heftverbindungen vorgesehen sind, alle Heftverbindungen gleichzeitig erzeugt. Die Anzahl und Verteilung der Sauggreifer richtet sich bspw. nach dem Gewicht und/oder der Größe der Zuschnitte. Auch die Anzahl der Heftstellen bzw. Heftverbindungen kann unter Berücksichtigung des Gewichts und/oder der Größe der Zuschnitte festgelegt werden. Es ist denkbar, das nicht alle Sauggreifer mit einer Heizeinrichtung ausgestattet sind, so dass manche Sauggreifer nur eine Transportfunktion jedoch keine Heftfunktion haben. Anstelle eines Mehrachsroboters kann, nicht gemäß der Erfindung, auch eine Portalvorrichtung oder dergleichen verwendet werden.

## Patentansprüche

1. Verfahren zur Herstellung eines aus mehreren Lagen bestehenden Fasergeleges (50) für die Weiterverarbeitung zu einem faserverstärkten Kunststoffbauteil, mit folgenden, automatisiert ausgeführten Schritten:
- Bereithalten mehrerer aus faserverstärktem thermoplastischen Halbzeug, das bereits mit einem thermoplastischen Matrix-Kunststoffwerkstoff versehen ist, gebildeter Zuschnitte (10, 20, 30, 40);
- Verlegen und Aufschichten der Zuschnitte (10, 20, 30, 40) auf einer Ablage (200), wozu eine Greifvorrichtung (100) wiederholend wenigstens einen Zuschnitt (30) aufnimmt, zu der Ablage (200) transportiert und dort in einer für den jeweiligen Zuschnitt (30) definierten Position und auch mit einer definierten Faserausrichtung ablegt; und
- thermisches Anheften des jeweils abzulegenden Zuschnitts (30), wozu dieser mit Hilfe der Greifvorrichtung (100) punktuell, nämlich an wenigstens einer Heftstelle, angeschmolzen und beim Ablegen an die zuvor abgelegten Zuschnitte (10, 40) angepresst wird, wobei die Zuschnitte (30) bereits während des Transports zur Ablage (200) mit Hilfe einer an der Greifvorrichtung (100) ausgebildeten Heizeinrichtung (134), die nur während des Transports eines Zuschnitts (30) beheizt wird, an wenigstens einer Heftstelle erwärmt werden und dabei der thermoplastische Kunststoff lokal angeschmolzen wird, so dass das Erwärmen und Transportieren in einem Arbeitsschritt erfolgt.

2. Verfahren nach Anspruch 1, **dadurch gekennzeichnet, dass** die Heizeinrichtung (134) eine Temperatur erzeugt, die um mehr als 50° K und somit deutlich oberhalb der Schmelztemperatur des thermoplastischen Kunststoffs liegt, wodurch der Kunststoff auch bei kurzem Verfahrweg und/oder kurzer Verfahrzeit angeschmolzen werden kann.

3. Verfahren nach einem der vorausgehenden Ansprüche, **dadurch gekennzeichnet, dass** ein abzulegender Zuschnitt (30) beim Ablegen senkrecht zur Ablage (200) bewegt wird.

4. Verfahren nach einem der vorausgehenden Ansprüche, **dadurch gekennzeichnet, dass** die Greifvorrichtung (100) mehrere nebeneinanderliegende und/oder übereinanderliegende Zuschnitte aufnimmt, zur Ablage (200) transportiert und dort ablegt.

5. Greifvorrichtung (100) zur Durchführung eines Verfahrens gemäß einem der vorausgehenden Ansprüche, umfassend einen Mehrachsroboter und wenigstens einen an dessen Roboterarm (120) befestigten und mit einer Heizeinrichtung (134) ausgebildeten Sauggreifer (130), sowie eine Steuereinrichtung zur Steuerung des Mehrachsroboters, des Sauggreifers (130) und der Heizeinrichtung (134),
- wobei der Sauggreifer (130) einen aus Metall oder aus Kunststoff gebildeten Korpus (131) mit einer daran ausgebildeten Ansaugfläche (132) aufweist,
- wobei die Ansaugfläche (132) des Sauggreifers (130) mit einer elektrischen Heizbeschichtung (134) versehen ist, mit der Temperaturen bis 400° C an der Ansaugfläche (132) erzeugt werden können,
- wobei die Ansaugfläche (132) des Sauggreifers (130) auch mit einer Antihaftbeschichtung (135) versehen ist, die auch bei hohen Temperaturen von bis zu 400° C wirkt und ein Anhaften des abgelegten Zuschnitts (30) am Sauggreifer (130) verhindert, und
- wobei die Heizbeschichtung (134) und die Antihaftbeschichtung (135) ein mehrlagiges Beschichtungssystem bilden.

## Claims

1. Method for producing a fibre arrangement comprising several layers (50) for further processing into a fibre-reinforced plastic component with the following steps, which are executed in an automated manner:
- provision of a plurality of cut blanks (10, 20, 30, 40) formed from fibre-reinforced thermoplastic semi-finished product already supplied with a thermoplastic matrix plastic material;
- placing and stacking of the cut blanks (10, 20, 30, 40) on a tray (200), for which purpose a gripping device (100) repeatedly picks up at least one cut blank (30), transports it to the tray (200) and deposits it there in a position defined for the particular cut blank (30) and also with a defined fibre direction; and
- thermal tacking of the particular cut blank (30) to be deposited, to which end this is molten in places, namely on at least one point of adhesion, with the help of the gripping device (100) and, when deposited onto the previously deposited cut blanks (10, 40), is pressed on,
whereby
the cut blanks (30) are warmed on at least one tacking point already during transport to the tray (200) with the help of a heating device (134) configured on the gripping device (100), which is heated only during transport of a cut blank (30), and thereby the thermoplastic is molten locally, so that the warming and transporting take place in one working step.

2. Method according to claim 1, **characterised in that** the heating device (134) generates a temperature which is more than 50°K higher and therefore considerably above the melting point of the thermoplastic, as a result of which the plastic can be molten even with a short process path and/or short process time.

3. Method according to any one of the preceding claims, **characterised in that** a cut blank (30) to be deposited is moved perpendicular to the tray (200) during depositing.

4. Method according to any one of the preceding claims, **characterised in that** the gripping device (100) picks up a plurality of cut blanks lying side by side and/or on top on one another, transports them to the tray (200) and deposits them there.

5. Gripping device (100) for performing a method according to any one of the preceding claims, comprising a multi-axis robot and at least one suction gripper (130) fastened to its robot arm (120) and configured with a heating device (134), and also a control device for controlling the multi-axis robot, the suction gripper (130) and the heating device (134),
- wherein the suction gripper (130) has a carcass (131) formed from metal or from plastic with a suction surface (132) configured thereon,
- wherein the suction surface (132) of the suction gripper (130) is equipped with an electric heating coating (134), with which temperatures up to 400°C on the suction surface (132) can be generated,
- wherein the suction surface (132) of the suction gripper (130) is also equipped with an anti-adhesion coating (135), which is effective even at high temperatures of up to 400°C and prevents any adhesion of the deposited cut blank (30) on the suction gripper (130), and
- wherein the heating coating (134) and the anti-adhesion coating (135) form a multi-layer coating system.

## Revendications

1. Procédé servant à fabriquer une nappe de fibres (50) constituée de plusieurs couches en vue du traitement ultérieur en un composant en matière synthétique renforcé par des fibres, avec des étapes qui suivent, exécutées de manière automatisée :
- de préparation de plusieurs découpes (10, 20, 30, 40) formées à partir d'un produit semi-fini thermoplastique renforcé par des fibres, qui est déjà pourvu d'un matériau en matière synthétique de matrice thermoplastique ;
- de pose et d'empilement des découpes (10, 20, 30, 40) sur un support (200), un dispositif de préhension (100) recevant à cet effet de manière répétée au moins une découpe (30), la transportant vers le support (200) et l'y déposant également dans une position définie pour la découpe (30) respective et également selon une orientation de fibres définie ; et
- d'adhérence thermique de la découpe (30) à déposer respectivement, cette dernière étant à cet effet fondue à l'aide du dispositif de préhension (100) de manière ponctuelle, à savoir au niveau d'au moins un emplacement de soudure, et étant pressée lors du dépôt contre les découpes (10, 40) déposées préalablement,
dans lequel
les découpes (30) sont réchauffées au niveau d'au moins un emplacement de soudure déjà lors du transport en direction du support (200) à l'aide d'un système de chauffage (134) réalisé au niveau du dispositif de préhension (100), qui est chauffé seulement pendant le transport d'une découpe (30), et le matériau synthétique thermoplastique est localement fondu de sorte que le réchauffement et le transport sont effectués lors d'une étape de travail.

2. Procédé selon la revendication 1, **caractérisé en ce que** le système de chauffage (134) génère une température qui est supérieure à 50 °K et ainsi se situe nettement au-dessus de la température de fusion de la matière synthétique thermoplastique, ce qui permet de faire fondre la matière synthétique également dans le cas d'un déplacement court et/ou d'un temps de déplacement court.

3. Procédé selon l'une quelconque des revendications précédentes, **caractérisé en ce qu'**une découpe (30) à déposer est déplacée lors du dépôt de manière perpendiculaire par rapport au support (200).

4. Procédé selon l'une quelconque des revendications précédentes, **caractérisé en ce que** le dispositif de préhension (100) reçoit plusieurs découpes situées les unes à côté des autres et/ou situées les unes au-dessus des autres, les transporte vers le support (200) et les y dépose.

5. Dispositif de préhension (100) servant à mettre en oeuvre un procédé selon l'une quelconque des revendications précédentes, comprenant un robot multiaxial et au moins un grappin d'aspiration (130) fixé au niveau du bras de robot (120) dudit robot multiaxial et réalisé avec un système de chauffage (134), et un système de commande servant à commander le robot multiaxial, le grappin d'aspiration (130) et le système de chauffage (134),
- dans lequel le grappin d'aspiration (130) présente un corps (131)formé à partir de métal ou à partir de matière synthétique avec une surface d'aspiration (132) réalisée au niveau dudit corps,
- dans lequel la surface d'aspiration (132) du grappin d'aspiration (130) est pourvue d'un revêtement de chauffage (134) électrique, avec lequel des températures allant jusqu'à 400 °C peuvent être générées au niveau de la surface d'aspiration (132),
- dans lequel la surface d'aspiration (132) du grappin d'aspiration (130) est pourvue également d'un revêtement antiadhésif (135), qui agit également en présence de températures élevées allant jusqu'à 400 °C et empêche une adhérence de la découpe (30) déposée au niveau du grappin d'aspiration (130), et
- dans lequel le revêtement de chauffage (134) et le revêtement antiadhésif (135) forment un système de revêtement multicouche.
